# EUROPEAN PATENT APPLICATION

(11) **EP 1 873 535 A1**
(43) Date of publication of application: **02.01.2008**
(21) Application number: 06013674.4
(22) Date of filing: 29.06.2006
(51) Int. Cl.: G01R 15/14, H02G 1/02, B61B 7/06

(54) **A self-propelled inspection apparatus**

(71) Applicant: ABB Research Ltd, 8050 Zürich (CH)
(72) Inventor: Rothman, Bengt, 72336 Västeras (SE); Dahlgren, Mikael, 72464 Västeras (SE); Danielsson, Torkel, 752763 Uppsala (SE)

(57) **Abstract**

The invention relates to a self-propelled inspection apparatus (1) for travelling along a power line (2), comprising:
- a body unit (10);
- a first propulsion unit (40), which is pivotally connected to the body unit via a first joint (12) and releasably engageable with and driveable along a power line;
- a second propulsion unit (60), which is pivotally connected to the body unit via a second joint (13) and releasably engageable with and driveable along a power line;
- actuators for pivoting the body unit in relation to the propulsion units about the respective joint; and
- centre of gravity displacement means (20) allowing the centre of gravity of the inspection apparatus to be moved back and forth between a first point (P1) located at or in the vicinity of said first joint and a second point (P2) located at or in the vicinity of said second joint.

## Description

### FIELD OF THE INVENTION AND PRIOR ART

The present invention relates to a self-propelled inspection apparatus according to the preamble of claim 1. The inventive inspection apparatus is intended to travel along a power line in order to carry out inspection of the power line and/or inspection of objects in the surroundings of the power line.

A self-propelled inspection apparatus for travelling along a power line is previously known from US 4 904 996 A. This known inspection apparatus comprises an elongated body unit and two propulsion units. The body unit supports inspection equipment in the form of cameras, sensors etc. The propulsion units are engageable with a power line and are each provided with driving means in the form of an electric motor for driving the propulsion unit, and thereby the body unit, along a power line when engaged therewith. The propulsion units are connected to the body unit at a distance from each other and actuators in the form of servomotors are provided in order to allow the body unit to be pivoted in relation to the respective propulsion unit. This known inspection apparatus is designed to be capable of passing an obstacle, such as a suspension insulator, when traveling along a power line. When the inspection apparatus encounters an obstacle, the rear propulsion unit is released from the power line so as to drop free of the power line. This propulsion unit and the body unit will then hang down in a vertical position suspended from the power line by the front propulsion unit. Thereupon, the free-hanging propulsion unit is rotated together with the body unit 180° about the longitudinal axis of the body unit and is then pivoted together with the body unit in a vertical plane so as to allow the propulsion unit to be engaged with the power line at a point beyond the obstacle. A corresponding procedure is then carried out in order to allow the other propulsion unit to pass the obstacle.

### SUMMARY OF THE INVENTION

The object of the present invention is to achieve a further development of a self-propelled inspection apparatus of the above-indicated type so as to provide an inspection apparatus that is improved in at least some aspect.

According to the invention, this object is achieved by a self-propelled inspection apparatus having the features defined in claim 1.

The inventive inspection apparatus comprises:
- a body unit;
- a first propulsion unit connected to the body unit via a first joint, the first propulsion unit being releasably engageable with a power line and being provided with driving means for driving it along a power line when engaged therewith;
- a second propulsion unit connected to the body unit via a second joint, the second propulsion unit being releasably engageable with a power line and being provided with driving means for driving it along a power line when engaged therewith;
- a first actuator for pivoting the body unit in relation to the first propulsion unit about said first joint;
- a second actuator for pivoting the body unit in relation to the second propulsion unit about said second joint; and
- centre of gravity displacement means allowing the centre of gravity of the inspection apparatus to be moved back and forth between a first point located at or in the vicinity of said first joint and a second point located at or in the vicinity of said second joint.

With the inventive construction, the centre of gravity of the inspection apparatus may be shifted during the passing of an obstacle on a power line so as to reduce the torque required for pivoting the body unit and a propulsion unit in relation to the other propulsion unit. Hereby, rather small and inexpensive actuators may be used for pivoting the body unit in relation to the respective propulsion unit even when rather heavy propulsion units are used and/or when the body unit carries rather heavy equipment. When the inspection apparatus is to pass an obstacle, the centre of gravity of the inspection apparatus will first be located at or in the vicinity of the joint between the body unit and the rear propulsion unit so as to make it easy to release the front propulsion unit from the power line by pivoting the body unit together with the front propulsion unit about this joint. When the front propulsion unit has been moved passed the obstacle by means of the rear propulsion unit and pivoted back into engagement with the power line, the centre of gravity displacement means will move the centre of gravity of the inspection apparatus to a point at or in the vicinity of the joint between the body unit and the front propulsion unit so as to make it easy to release the rear propulsion unit from the power line by pivoting the body unit together with the rear propulsion unit about this joint. The rear propulsion unit is then moved passed the obstacle by means of the front propulsion unit and pivoted back into engagement with the power-line.

Different preferred embodiments of the inventive inspection apparatus will appear from the following description and the dependent claims.

### BRIEF DESCRIPTION OF THE DRAWINGS

With reference to the appended drawings, a specific description of preferred embodiments of the invention cited as examples follows below. In the drawings:
- Fig 1: is a schematic perspective view of an inspection apparatus according to a first embodiment of the present invention,
- Figs 2-8: shows the inspection apparatus of Fig 1 in different stages during the passing of an obstacle on a power line,
- Fig 9: is a schematic lateral view of an inspection apparatus according to a second embodiment of the present invention, and
- Fig 10: is a schematic cross-sectional view of the inspection apparatus of Fig 9, as seen along the line X-X in Fig 9.

### DETAILED DESCRIPTION OF PREFERRED EMBODIMENTS OF THE INVENTION

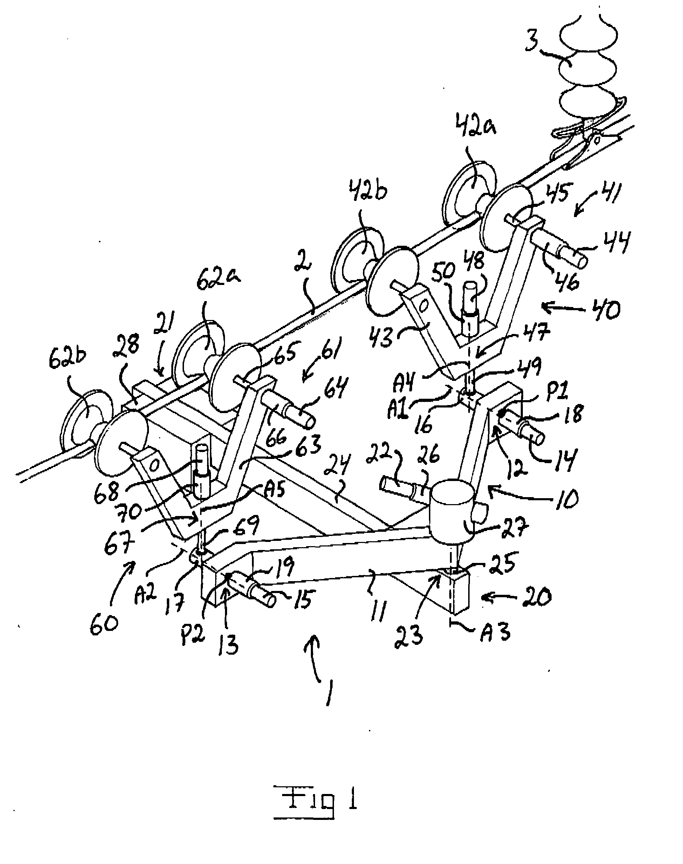

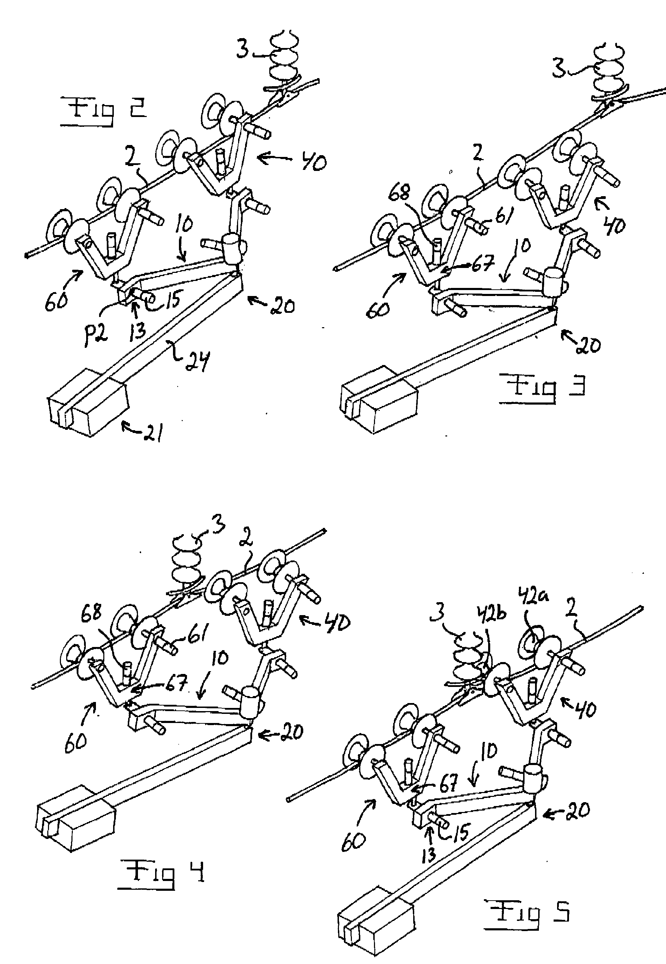

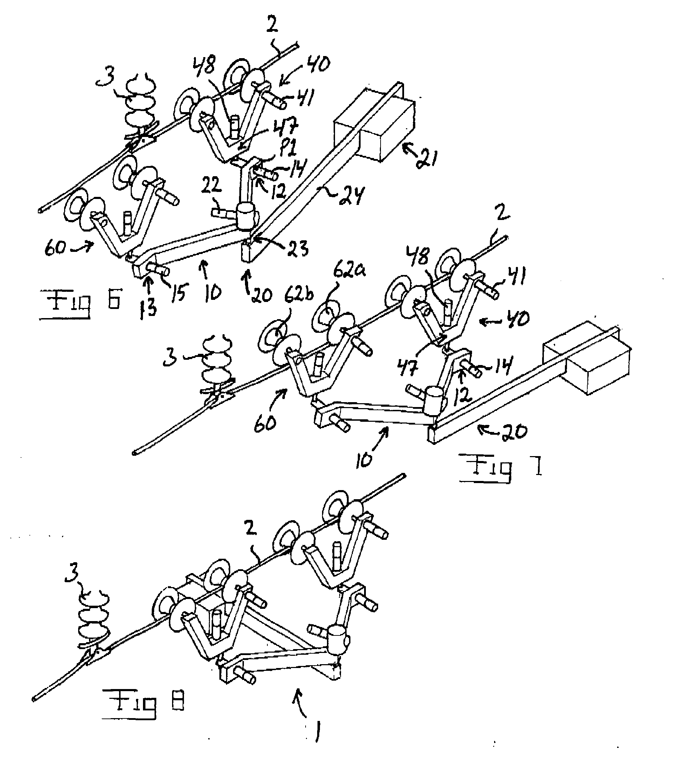

Figs 1-10 very schematically illustrate an inspection apparatus 1 according to two different embodiments of the present invention. Similar details of the two embodiments are denoted with the same reference signs in Figs 1-10.

The inspection apparatus 1 is self-propelled so as to be capable of travelling along a power line 2 in order to carry out inspection of the power line and/or inspection of objects in the surroundings of the power line, such as suspension insulators, towers, surrounding vegetation etc.

The inspection apparatus comprising an elongated body unit 10, which is to carry for instance the desired inspection equipment and the power sources required for operating said equipment. The body unit 10 may be formed of one or several beams 11. The body unit 10 is to hang below a power line 2 suspended from the power line via two propulsion units 40, 60. A first propulsion unit 40, which constitutes the front propulsion unit in Figs 1-10, is pivotally connected to the body unit 10 via a first joint 12, and a second propulsion unit 60, which constitutes the rear propulsion unit in Figs 1-10, is pivotally connected to the body unit 10 via a second joint 13. The inspection apparatus comprises a first actuator 14 for pivoting the body unit 10 in relation to the first propulsion unit 40 about said first joint 12 and a second actuator 15 for pivoting the body unit 10 in relation to the second propulsion unit 60 about said second joint 13. In the illustrated embodiments, each of said joints 12, 13 is designed to allow a relative movement between the body unit 10 and the respective propulsion unit 40, 60 with one degree of freedom, namely a pivoting movement about an essentially horizontal pivot axis A1, A2. Said actuators 14, 15 are preferably electric motors. In the embodiment illustrated in Fig 1, the respective actuator 14, 15 is connected to an associated pivot shaft 16, 17 via a planetary gearing 18, 19. In the embodiment illustrated in Fig 1, the first and second actuators 14, 15 and the associated planetary gearings 18, 19 are mounted to the body unit 10 and said pivot shafts 16, 17 are pivotally connected to the body unit 10.

Each propulsion unit 40, 60 is releasably engageable with a power line 2 and is provided with driving means 41, 61 for driving the propulsion unit 40, 60 and thereby the entire inspection apparatus 1 along a power line when engaged therewith.

In the embodiment illustrated in Fig 1, each propulsion unit 40, 60 is provided with two wheels 42a, 42b, 62a, 62b, which are rotatably mounted to a frame 43, 63 at a distance from each other The wheels 42a, 42b, 62a, 62b are designed to run on top of a power line 2. In the illustrated example, one wheel 42a, 62a of each propulsion unit is drivingly connected to the driving means 41, 61 of the propulsion unit, whereas the other wheel 42b, 62b is free to rotate in relation to the associated frame 43, 63. Alternatively, all the wheels of the respective propulsion unit may be drivingly connected to the driving means of the propulsion unit. The driving means 41, 61 of the respective propulsion unit preferably comprises an electric motor 44, 64. In the embodiment illustrated in Fig 1, the respective electric motor 44, 64 is connected to a shaft 45, 65 of the associated wheel 42a, 62a via a planetary gearing 46, 66. In the embodiment illustrated in Fig 1, the electric motor 44, 64 and the associated planetary gearing 46, 66 are mounted to the frame 43, 63 of the associated propulsion unit 40, 60.

In the embodiment illustrated in Figs 9 and 10, each propulsion unit 40, 60 is provided with five wheels 42a-42e, 62a-62e, which are rotatably mounted to a frame 43, 63 at a distance from each other. Three upper wheels 42a-42c, 62a-62c of each propulsion unit are designed to run on top of a power line 2, whereas the other lower wheels 42d, 42e, 62d, 62e are designed to engage the power line from below. In this case, the respective propulsion unit 40, 60 has to be provided with means (not shown) for displacing the upper wheels 42a-42c, 62a-62c in relation to the lower wheels 42d, 42e, 62d, 62e so as to allow the distance between the upper wheels and the associated lower wheels in the vertical direction to be shifted when the propulsion unit is to be engaged with or disengaged from the power line. At least one of the wheels of each propulsion unit is drivingly connected to the driving means of the propulsion unit, whereas the other wheels may be free to rotate in relation to the associated frame 43, 63. Alternatively, all the wheels of the respective propulsion unit may be drivingly connected to the driving means of the propulsion unit.

In the illustrated embodiments, the body unit 10 is connected to the first propulsion unit 40 via said first joint 12 and a further joint 47, here denominated fourth joint, and connected to the second propulsion unit 60 via said second joint 13 and a further joint 67, here denominated fifth joint. The inspection apparatus 1 comprises an actuator 48, here denominated fourth actuator, for pivoting the body unit 10 in relation to the first propulsion unit 40 about said fourth joint 47, and an actuator 68, here denominated fifth actuator, for pivoting the body unit 10 in relation to the second propulsion unit 60 about said fifth joint 67. In the illustrated embodiments, each of said joints 47, 67 is designed to allow a relative movement between the body unit 10 and the respective propulsion unit 40, 60 with one degree of freedom, namely a pivoting movement about a pivot axis A4, A5 essentially perpendicular to the other pivot axis A1, A2 between the body unit 10 and the associated propulsion unit 40, 60.

Said fourth and fifth actuators 48, 68 are preferably electric motors. In the embodiment illustrated in Fig 1, the respective actuator 48, 68 is connected to an associated pivot shaft 49, 69 via a planetary gearing 50, 70. The pivot shaft 49 of the fourth joint 47 is rigidly secured to the above-indicated pivot shaft 16 of the first joint 12 and the pivot shaft 69 of the fifth joint 67 is rigidly secured to the above-indicated pivot shaft 17 of the second joint 13. In the embodiment illustrated in Fig 1, the fourth and fifth actuators 48, 68 and the associated planetary gearings 50, 70 are mounted to the frame 43, 63 of the associated propulsion unit 40, 60 and said pivot shafts 49, 69 are pivotally connected to said frame 43, 63.

The inspection apparatus 1 comprises centre of gravity displacement means 20 allowing the centre of gravity of the inspection apparatus to be moved back and forth between a first point P1 located at or in the vicinity of said first joint 12 and a second point P2 located at or in the vicinity of said second joint 13.

In the illustrated embodiments, the centre of gravity displacement means 20 comprises:
- a weight member 21 that is moveable back and forth in relation to the body unit 10 so as to thereby allow the centre of gravity of the inspection apparatus 1 to be moved back and forth between said first point P1 and said second point P2; and
- an actuator 22, here denominated third actuator, for moving the weight member 21 in relation to the body unit 10.

In the embodiment illustrated in Fig 1, the weight member 21 is pivotally connected to the body unit 10 via a joint 23, here denominated third joint, located between said first joint 12 and said second joint 13. The weight member 21 may be fixed to a pivot arm 24 that is pivotally mounted to the body unit 10 via said third joint 23, as illustrated in Figs 1-8. The pivot arm 24 and the weight member 21 are pivotable in relation to the body unit 10 by means of said third actuator 22. In embodiment illustrated in Figs 1-8, said third joint 23 is designed to allow a relative movement between the body unit 10 and the pivot arm 24 with one degree of freedom, namely a pivoting movement about an axis A3. Said third actuator 22 is preferably an electric motor. In the embodiment illustrated in Fig 1, the third actuator 22 is connected to an associated pivot shaft 25 via a planetary gearing 26 and a worm gear 27. The pivot shaft 25 is rigidly secured to the pivot arm 24. In the embodiment illustrated in Fig 1, the third actuator 22 is mounted to the body unit 10 together with the associated planetary gearing 26 and worm gear 27, whereas the pivot shaft 25 is pivotally connected to the body unit 10.

The weight member 21 may alternatively be displaceably connected to the body unit 10 so as to be linearly displaceable along the body unit by means of said third actuator 22, as illustrated in Figs 9 and 10. In the embodiment illustrated in Figs 9 and 10, the weight member 21 is suspended from a U-shaped beam 11 of the body unit 10 via a number of wheels 30a-30c received in a guiding groove 31 of said beam 11. Said wheels 30a-30c are rotatably mounted to the weight member 21. The weight member 21 is driven along a screw threaded rod 33, which is rigidly secured to the beam 11 and extends in parallel therewith. In this case, the third actuator 22 is arranged to rotate a threaded sleeve 34, which is rotatably mounted to the weight member 21 and is in engagement with the threaded rod 33. By rotation of the threaded sleeve 34 in the desired direction, the sleeve 34 will move along the threaded rod 33 in the desired direction so as to thereby displace the weight member 21 along the body unit 10.

The weight member 21 preferably comprises a housing 28 or frame carrying inspection equipment, such as cameras, sensors, computers etc., by means of which a power line and/or objects in the surroundings of a power line may be inspected. The housing/frame 28 may also carry one or several electrical batteries for supplying electrical power to the inspection equipment and/or to one or several of the above-indicated actuators 14, 15, 22, 48, 68 and/or to said driving means 41, 61.

The ability of the inventive inspection apparatus 1 to pass an obstacle 3 on a power line 2 will in the following be described with reference to Figs 1-8, which show the inspection apparatus according to Fig 1 during the passing of an obstacle 3 in the form of a suspension insulator. It should be realized that the inspection apparatus according to Figs 9 and 10 is capable of passing an obstacle along a power line in a corresponding manner.

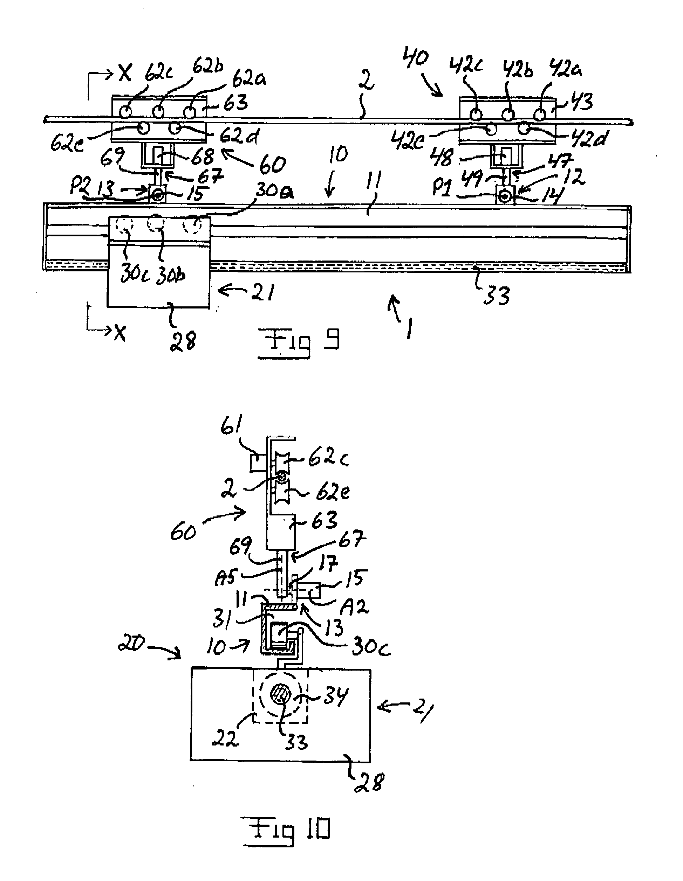

The inspection apparatus 1 travels along a power line 2 with the two propulsion units 40, 60 in engagement with the power line (see Fig 1). When the inspection apparatus 1 encounters the obstacle 3, the driving means 41, 61 of the propulsion units are stopped and the centre of gravity displacement means 20 is made to locate the centre of gravity of the inspection apparatus at the point P2 at or close to the joint 13 between the body unit 10 and the rear propulsion unit 60. Thereafter, the actuator 15 at the joint 13 is made to pivot the body unit 10 about the joint 13 upwards so as to disengage the front propulsion unit 40, from the power line- 2 (see Fig 2). The actuator 68 at the other joint 67 between the rear propulsion unit 60 and the body unit 10 is then made to pivot the body unit 10 about the joint 67 laterally away from the power line 2 so as to allow the front propulsion unit 40 to run free of the obstacle 3 (see Fig 3). Thereafter, the driving means 61 of the rear propulsion unit 60 is actuated so as to drive the inspection apparatus 1 forward until the front propulsion unit 40 has passed the obstacle 3 (see Fig 4), whereupon the driving means 61 is stopped. The actuator 68 is then made to pivot the body unit 10 about the joint 67 laterally towards the power line 2 so as to locate the wheels 42a, 42b of the front propulsion unit 40 above the power line 2 on the other side of the obstacle 3 (see Fig 5), whereupon the actuator 15 is made to pivot the body unit 10 about the joint 13 downwards so as to engage the front propulsion unit 40 with the power line 2. The centre of gravity displacement means 20 is now made to relocate the centre of gravity of the inspection apparatus to the point P1 at or close to the joint 12 between the body unit 10 and the front propulsion unit 40 by making the actuator 22 pivot the weight member 21 about the joint 23 from the position illustrated in Figs 2-5 to the position illustrated in Fig 6. Thereafter, the actuator 14 at the joint 12 is made to pivot the body unit 10 about the joint 12 upwards so as to disengage the rear propulsion unit 60 from the power line 2 and the actuator 48 at the other joint 47 between the front propulsion unit 40 and the body unit 10 is then made to pivot the body unit 10 about the joint 47 laterally away from the power line 2 so as to allow the rear propulsion unit 60 to run free of the obstacle 3 (see Fig 6). Thereafter, the driving means 41 of the front propulsion unit 40 is actuated so as to drive the inspection apparatus 1 forward until the rear propulsion unit 60 has passed the obstacle 3 (see Fig 7), whereupon the driving means 41 is stopped. The actuator 48 is then made to pivot the body unit 10 about the joint 47 laterally towards the power line 2 so as to locate the wheels 62a, 62b of the rear propulsion unit 60 above the power line 2 on the other side of the obstacle 3, whereupon the actuator 14 is made to pivot the body unit 10 about the joint 12 downwards so as to engage the rear propulsion unit 60 with the power line 2. The inspection apparatus 1 is now free to continue travelling along the power line 2 on the other side of the obstacle 3 (see Fig 8).

The inspection apparatus 1 is preferably provided with suitable sensors (not shown) for detecting an obstacle in front of the inspection apparatus as it travels along a power line. These sensors may be connected to an electronic control unit (not shown), which controls the actuators 14, 15, 22, 48, 68 and the driving means 41, 61 of the inspection apparatus 1 based on signals from the sensors so as to allow the inspection apparatus to automatically pass a detected obstacle in the manner described above with reference to Figs 1-8.

Each propulsion unit 40, 60 is suitably provided with a sensor (not shown), preferably in the form of a three-dimensional electromagnetic sensor, for instance a Hall sensor, for detecting the position of the propulsion unit in relation to a power line 2. Measuring signals from this sensor is used in order to secure a correct positioning of the propulsion unit 40, 60 in relation to the power line when the propulsion unit is to be brought back into engagement with the power line 2 after having passed an obstacle thereon.

The inspection apparatus may be provided with means for inductively capture energy from a power line when engaged therewith. This captured energy may be used for supplying power to the electrically driven components of the inspection apparatus.

The invention is of course not in any way restricted to the embodiments described above. On the contrary, many possibilities to modifications thereof will be apparent to a person with ordinary skill in the art without departing from the basic idea of the invention such as defined in the appended claims. The above-indicated fourth and fifth joints 47, 67 and the associated actuators 48, 68 may for instance be omitted if the respective propulsion unit 40, 60 is provided with means for displacing its wheels horizontally in relation to the frame 43, 63 perpendicular to the traveling direction of the inspection apparatus in order to allow the wheels to run free of a power line.

## Claims

1. A self-propelled inspection apparatus for travelling along a power line, the inspection apparatus (1) comprising:
- a body unit (10);
- a first propulsion unit (40) pivotally connected to the body unit (10) via a first joint (12);
- a second propulsion unit (60) pivotally connected to the body unit (10) via a second joint (13);
- a first actuator (14), preferably in the form of an electric motor, for pivoting the body unit (10) in relation to the first propulsion unit (40) about said first joint (12); and
- a second actuator (15), preferably in the form of an electric motor, for pivoting the body unit (10) in relation to the second propulsion unit (60) about said second joint (13);
wherein each propulsion unit (40, 60) is releasably engageable with a power line and is provided with driving means (41, 61) for driving the propulsion unit (40, 60) along a power line when engaged therewith,
**characterized in that** the inspection apparatus (1) comprises centre of gravity displacement means (20) allowing the centre of gravity of the inspection apparatus to be moved back and forth between a first point (P1) located at or in the vicinity of said first joint (12) and a second point (P2) located at or in the vicinity of said second joint (13).

2. An inspection apparatus according to claim 1, **characterized in that** the centre of gravity displacement means (20) comprises:
- at least one weight member (21) that is moveable back and forth in relation to the body unit (10) so as to thereby allow the centre of gravity of the inspection apparatus (1) to be moved back and forth between said first point (P1) and said second point (P2); and
- a third actuator (22), preferably in the form of an electric motor, for moving the weight member (21) in relation to the body unit (10).

3. An inspection apparatus according to claim 2, **characterized in that** the weight member (21) is pivotally connected to the body unit (10), the weight member being pivotable in relation to the body unit by means of said third actuator (22).

4. An inspection apparatus according to claim 3, **characterized in that** the weight member (21) is pivotally connected to the body unit (10) via a third joint (23) located between said first joint (12) and said second joint (13).

5. An inspection apparatus according to claim 3 or 4, **characterized in that** the weight member (21) is fixed to a pivot arm (24) that is pivotally mounted to the body unit (10).

6. An inspection apparatus according to claim 2, **characterized in that** the weight member (21) is displaceably connected to the body unit (10) so as to be linearly displaceable along the body unit (10) by means of said third actuator (22).

7. An inspection apparatus according to any of claims 2-6, **characterized in that** the weight member (21) comprises a housing (28) or frame carrying inspection equipment, by means of which a power line and/or objects in the surroundings of a power line may be inspected.

8. An inspection apparatus according to claim 7, **characterized in that** the housing (28) or frame carries one or several electrical batteries for supplying electrical power to the inspection equipment and/or to at least one of said actuators (14, 15, 22) and/or to said driving means (41, 61).

9. An inspection apparatus according to any of claims 1-8, **characterized in:**
- **that** the body unit (10) is connected to the first propulsion unit (40) via said first joint (12) and a further joint (47), here denominated fourth joint;
- **that** the body unit (10) is connected to the second propulsion unit (60) via said second joint (13) and a further joint (67), here denominated fifth joint; and
- **that** the inspection apparatus (1) comprises an actuator (48), here denominated fourth actuator, for pivoting the body unit (10) in relation to the first propulsion unit (40) about said fourth joint (47), and an actuator (68), here denominated fifth actuator, for pivoting the body unit (10) in relation to the second propulsion unit (60) about said fifth joint (67).

10. An inspection apparatus according to claim 9, **characterized in:**
- **that** said first and second actuators (14, 15) are mounted to the body unit (10);
- **that** said fourth actuator (48) is mounted to the first propulsion unit (40); and
- **that** said fifth actuator (68) is mounted to the second propulsion unit (60).

11. An inspection apparatus according to any of claims 1-10, **characterized in that** each propulsion unit (40, 60) is provided with a sensor, preferably in the form of a three-dimensional electromagnetic sensor, for detecting the position of the propulsion unit in relation to a power line.
